# EUROPÄISCHE PATENTSCHRIFT

(11) **EP 0 756 552 B1**
(45) Veröffentlichungstag und Bekanntmachung des Hinweises auf die Patenterteilung: **03.03.1999**
(21) Anmeldenummer: 95916659.6
(22) Anmeldetag: 15.04.1995
(51) Int. Cl.: B62D 7/14

(54) **MEHRACHSLENKANLAGE FÜR FAHRZEUGE**
MULTI-AXLE STEERING SYSTEM FOR VEHICLES
SYSTEME DE DIRECTION A ESSIEUX MULTIPLES POUR VEHICULES

(30) Priorität: 22.04.1994 DE 4414161
(43) Veröffentlichungstag der Anmeldung: 05.02.1997
(73) Patentinhaber: ZF FRIEDRICHSHAFEN Aktiengesellschaft, 88038 Friedrichshafen (DE)
(72) Erfinder: ELSER, Dieter, D-73547 Essingen (DE); RIEF, Klaus, D-73527 Herlikofen (DE)
(86) Internationale Anmeldenummer: EP9501417
(87) Internationale Veröffentlichungsnummer: WO9529087

(56) Entgegenhaltungen:
- EP-A- 0 150 520
- DE-A- 3 720 273
- US-A- 2 735 502

## Beschreibung

Die Erfindung betrifft eine Mehrachslenkanlage für Fahrzeuge nach dem Oberbegriff des Anspruches 1. Die Lenkanlage enthält ein Lenkgetriebe für eine erste Lenkachse, im allgemeinen eine Vorderachse eines Fahrzeuges, und eine hydrostatische Lenkung für eine zweite Lenkachse, beispielsweise eine Nachlaufachse am hinteren Teil des Fahrzeuges. Die hydrostatische Lenkung wird gebildet durch einen an der ersten Lenkachse angeordneten Geberzylinder und einen an der zweiten Lenkachse angeordneten Nehmerzylinder, wobei der Nehmerzylinder zwei Arbeitsräume aufweist, die über Druckleitungen mit zwei Arbeitsräumen des Geberzylinders verbunden sind. Die zweite Lenkachse weist eine Zentriereinrichtung auf für eine Rückstellung der gelenkten Räder der zweiten Lenkachse in ihre Geradeausfahrtstellung.

Eine derartige Mehrachslenkanlage ist bekannt aus der EP-B1-0 150 520. Diese Mehrachslenkanlage ist vorgesehen für ein Fahrzeug mit drei Achsen. Von diesen drei Achsen sind die Vorderachse und die zweite Hinterachse lenkbar ausgebildet. Die bekannte Mehrachslenkanlage weist einen automatischen Stabilisator zum Geradeausfahren der hinteren Lenkachse auf. Zum Stabilisieren der Geradeausfahrtstellung der hinteren Lenkachse wird in der Mittelstellung der vorderen Lenkachse oder in deren Nähe eine Flüssigkeitsverbindung zu einem Vorratsbehälter hergestellt, wodurch eine Druckentladung eines an der Vorderachse angeordneten Hydraulikzylinders in dessen Mittelstellung erreicht wird. Nachteilig ist bei dieser Mehrachslenkanlage, daß nach jedem Durchgang durch die Mittelstellung der Druck in dem Hydraulikzylinder, der als Geberzylinder für die hydrostatische Lenkung wirkt, von Null auf neu aufgebaut werden muß.

Der Erfindung liegt die Aufgabe zugrunde, eine Mehrachslenkanlage für Fahrzeuge der bekannten Art derart zu verbessern, daß die beschriebenen Nachteile vermieden werden, insbesondere dadurch, daß Druckverluste und damit Energieverluste weitgehend vermieden werden und eine gute Synchronisierung der beiden Lenkachsen sichergestellt wird.

Diese Aufgabe wird durch die im Anspruch 1 gekennzeichnete Mehrachslenkanlage gelöst. Die Lösung erfolgt dadurch, daß die beiden Arbeitsräume des Geberzylinders gleiche wirksame Flächen aufweisen und daß an dem Geberzylinder eine Einrichtung zum automatischen Synchronisieren der Bewegungen des Geberzylinders und des Nehmerzylinders vorgesehen ist, durch die in der Geradeausfahrtstellung und in einem daran angrenzenden kleinen Bereich eine Verbindung nur zwischen den beiden Arbeitsräumen des Geberzylinders herstellbar ist, so daß sich in den Arbeitsräumen des Nehmerzylinders kein Druck aufbauen kann und die zweite Lenkachse in ihrer Geradeausfahrtstellung zentriert bleibt.

Zweckmäßige und vorteilhafte Ausgestaltungen der Erfindung sind in den Unteransprüchen angegeben. Die Erfindung ist jedoch nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Besonders vorteilhaft und einfach ist die Einrichtung zum Synchronisieren in einem Führungseinsatz der Kolbenstange des Geberzylinders durch einen elastischen Dichtring gebildet, der in einer in dem Führungseinsatz radial nach innen offenen Ringnut gehalten ist. Der Dichtring wirkt mit einer ringförmigen Einschnürung der Kolbenstange derart zusammen, daß in der Geradeausfahrtstellung und in dem daran angrenzenden Bereich zwischen dem Dichtring und der Einschnürung eine Verbindung zwischen den Arbeitsräumen des Geberzylinders besteht und daß außerhalb dieses Bereiches der Dichtring dichtend an dem zylindrischen Teil der Kolbenstange anliegt und so die beiden Arbeitsräume voneinander getrennt sind.

Bei dieser Ausführung ist in der Geradeausfahrtstellung eine direkte Verbindung von den beiden Arbeitsräumen des Geberzylinders zu einem Behälter ausgeschlossen. Es besteht lediglich eine Verbindung zwischen den beiden Arbeitsräumen des Geberzylinders, so daß sich in den Arbeitsräumen des Nehmerzylinders kein Druck aufbauen kann und die zweite Lenkachse in ihrer Geradeausfahrtstellung zentriert bleibt. Dadurch ist bei jedem Durchgang des Geberzylinders durch die Geradeausfahrtstellung eine Synchronisierung des Nehmerzylinders mit dem Geberzylinder sichergestellt.

Die Länge des Bereiches der Geradeausfahrtstellung, in dem ein Druckaufbau im Nehmerzylinder verhindert werden soll, läßt sich leicht festlegen durch die Länge der Einschnürung der Kolbenstange, indem die Länge ihres zylindrischen Bereiches und/oder die Länge und Neigung des Überganges zum vollen Außendurchmesser der Kolbenstange variiert werden.

Zwischen den beiden Arbeitsräumen des Geberzylinders bzw. des Nehmerzylinders sind zwei Ausgleichsventile angeordnet, von denen jeweils nur eines geschlossen sein kann. Die den Arbeitsräumen abgewandten Rückseiten der Ausgleichsventile sind an einen Druckspeicher angeschlossen. Dadurch wird erreicht, daß bei Temperaturänderungen der Systemdruck annähernd konstant gehalten werden kann, d. h., daß beispielsweise bei einem Temperaturanstieg kein Druckanstieg erfolgt. Außerdem kann durch den angeschlossenen Druckspeicher das hydrostatische Lenksystem vorgespannt werden. Dadurch wird die Steifigkeit des Systems gefördert.

Besonders vorteilhaft ist es, die beiden Ausgleichsventile als Kugelsitzventile auszubilden, die zwei voneinander abgewandte, koaxial zueinander angeordnete Ventilsitze aufweisen. Der Abstand der Ventilsitze ist derart festgelegt, daß sich die Ventilkugeln berühren, bevor eine der Ventilkugeln an einem der Ventilsitze anliegt. Dadurch wird sichergestellt, daß jeweils nur eines der Ausgleichsventile geschlossen sein kann. Besonders raumsparend lassen sich die beiden Ausgleichsventile in dem Führungseinsatz anordnen.

Ebenso lassen sich zwei Druckbegrenzungsventile, die für die beiden Seiten der hydrostatischen Lenkung vorteilhaft sind, in dem Führungseinsatz anordnen.

Wird die Zentriereinrichtung der zweiten Lenkachse als hydraulische Zylinder-Kolben-Einheit ausgeführt, die an den Druckspeicher angeschlossen ist, so erhält man dadurch auf einfache Weise eine Zentriereinrichtung, deren Zentrierkraft über den Druck des Druckspeichers einstellbar ist.

Im folgenden wird die Erfindung anhand zweier in der Zeichnung dargestellter Ausführungsbeispiele näher erläutert.
Es zeigen:
- Fig. 1: ein hydraulisches Schaltbild der erfindungsgemäßen Mehrachslenkanlage nach einem ersten Ausführungsbeispiel mit einem Geberzylinder an einer ersten Lenkachse und einem Nehmerzylinder an einer zweiten Lenkachse, in schematischer Darstellung;
- Fig. 2: einen Längsschnitt durch eine konstruktive Ausführungsform des Geberzylinders;
- Fig. 3: einen Längsschnitt durch einen Führungseinsatz des Geberzylinders der Fig. 2;
- Fig. 4: einen Längsschnitt durch eine konstruktive Ausführungsform des Nehmerzylinders und
- Fig. 5: ein hydraulisches Schaltbild der erfindungsgemäßen Mehrachslenkanlage nach einem zweiten Ausführungsbeispiel.

Die erfindungsgemäße Mehrachslenkanlage ist beispielsweise vorgesehen für ein Fahrzeug mit drei Achsen, von denen eine erste Lenkachse 1 als lenkbare Vorderachse des Fahrzeugs ausgebildet ist und eine zweite Lenkachse 2 als lenkbare Nachlaufachse hinter einer starren Hinterachse 3 des Fahrzeugs angeordnet ist. Die erste Lenkachse 1 wird von einem Lenkgetriebe 4 gesteuert. Das Lenkgetriebe 4 ist als Hilfskraftlenkung ausgeführt, die an eine Servopumpe 5 und einen Behälter 6 angeschlossen ist. Die Servopumpe 5 wird zweckmäßigerweise vom Fahrzeugmotor 7 angetrieben. Die Ausbildung des Lenkgetriebes 4 ist nicht erfindungswesentlich und wird deshalb nicht näher beschrieben. Anstelle einer Hilfskraftlenkung kann beispielsweise bei kleineren, leichteren Fahrzeugen eine manuelle Lenkung vorgesehen werden. Sowohl bei einer Hilfskraftlenkung als auch bei einer manuellen Lenkung besteht zweckmäßigerweise eine mechanische Verbindung von dem Lenkgetriebe 4 zu der ersten Lenkachse 1 über ein Lenkgestänge 8.

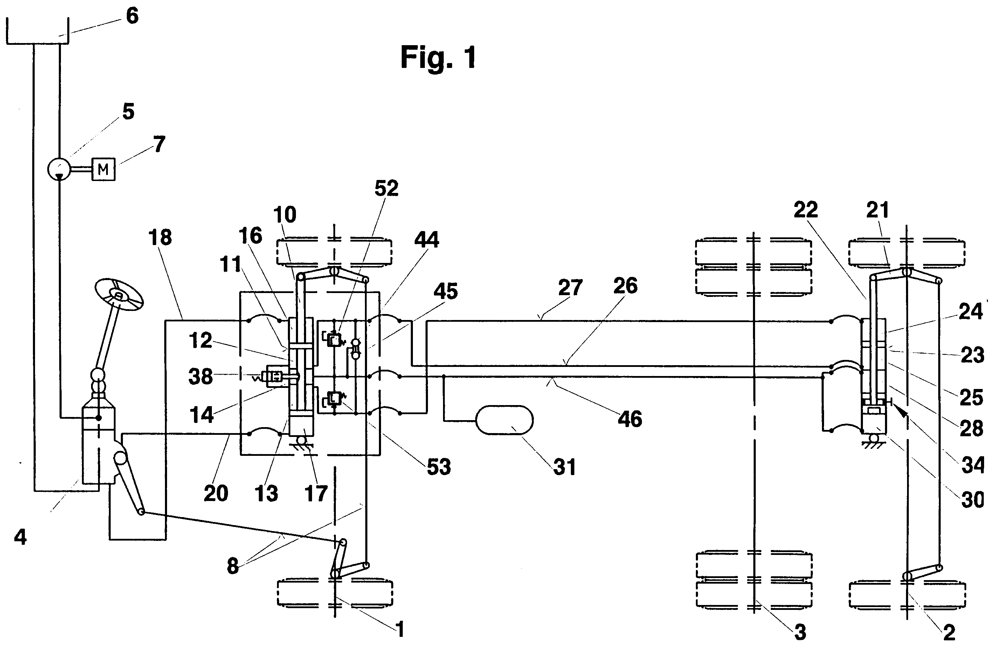

Mit dem Lenkgestänge 8 ist eine Kolbenstange 10 eines Geberzylinders 11 verbunden. Der Geberzylinder 11 enthält zwei Druckräume 12 und 13, zwischen denen sich ein Führungseinsatz 14 mit einem zentrischen, im wesentlichen zylindrischen Durchlaß 15 für die Kolbenstange 10 befindet. Ist das Lenkgetriebe 4, wie in Fig. 1, als Hilfskraftlenkung ausgebildet, so schließen sich an die beiden Arbeitsräume 12 und 13 des eigentlichen Geberzylinders 11 zwei weitere Arbeitsräume 16 und 17 an, die zur Hilfskraftunterstützung der Lenkbewegungen der ersten Lenkachse 1 dienen. Diese beiden Arbeitsräume 16 und 17 sind über zwei Arbeitsleitungen 18 und 20 mit dem Lenkgetriebe 4 verbunden.

Mit einem Lenkgestänge 21 der zweiten Lenkachse 2 ist eine Kolbenstange 22 eines Nehmerzylinders 23 verbunden. Der Nehmerzylinder 23 weist zwei Arbeitsräume 24 und 25 auf, die über Leitungen 26 und 27 mit den Arbeitsräumen 12 bzw. 13 des Geberzylinders 11 verbunden sind. Der Geberzylinder 11 und der Nehmerzylinder 23 bilden zusammen mit den Leitungen 26 und 27 eine hydrostatische Lenkung für die zweite Lenkachse 2.

Der Nehmerzylinder 23 enthält zwei weitere Arbeitsräume 28 und 30, die beide an einen Druckspeicher 31 angeschlossen sind. Die beiden Arbeitsräume 28 und 30 bilden zusammen mit zwei in dem Nehmerzylinder schwimmend gelagerten Kolben 32 und 33 eine Zentriereinrichtung 34 für eine Rückstellung der gelenkten Räder der zweiten Lenkachse 2 in ihre Geradeausfahrtstellung. Die beiden Kolben 32 und 33 drücken durch den in den Arbeitsräumen 28 und 30 herrschenden Speicherdruck die Kolbenstange 22 über einen an ihrem Ende befestigten Federring 35 in Richtung auf einen zentralen Anschlag, der durch einen in dem Nehmerzylinder 23 festgelegten Federring 36 gebildet ist. Zwischen den beiden Kolben 32 und 33 liegt ein luftgefüllter Zwischenraum 37, in dem beim Auslenken der zweiten Lenkachse 2 ein Unterdruck entsteht.

An dem Geberzylinder 11 und zweckmäßigerweise dort in dem Führungseinsatz 14 ist eine Einrichtung 38 zum automatischen Synchronisieren der Bewegungen des Geberzylinders 11 und des Nehmerzylinders 23 vorgesehen. Die Einrichtung 38 ist gebildet durch einen elastischen Dichtring 39, der in einer in dem Führungseinsatz 14 radial nach innen in Richtung auf den Durchlaß 15 hin offenen Ringnut 40 gehalten ist. Der Dichtring 39 wirkt zusammen mit einer ringförmigen Einschnürung 41 der Kolbenstange 10. Die Einschnürung 41 weist in ihrer Mitte einen zylindrischen Bereich auf, an den sich nach beiden Seiten hin ein Übergang bis zum vollen Außendurchmesser der Kolbenstange 10 anschließt. In der Geradeausfahrtstellung der zu lenkenden Fahrzeugräder der ersten Lenkachse 1 befindet sich die Einschnürung 41 im Bereich des Dichtringes 39. Zwischen dem Dichtring 39 und dem zylindrischen Bereich der Einschnürung 41 besteht in der Geradeausfahrtstellung ein Ringspalt, über den in Verbindung mit zwei Axialnuten 42 und 43 eine offene Verbindung zwischen den beiden Arbeitsräumen 12 und 13 des Geberzylinders 11 besteht. Die beiden Axialnuten 42 und 43 sind im Inneren des Durchlasses 15 gebildet und sind nach beiden Seiten des Führungseinsatzes 14 hin offen. Der Übergang von dem zylindrischen Bereich der Einschnürung 41 zum vollen Außendurchmesser der Kolbenstange 10 besteht zweckmäßigerweise aus Kegelstumpfflächen mit einer sehr kleinen Neigung, so daß der Dichtring 39 bei einer Verschiebung der Kolbenstange 10 sich stetig ausdehnen kann, bis er schließlich auf der zylindrischen Außenfläche der Kolbenstange 10 dichtend anliegt und dadurch bei einer weiteren Bewegung der Kolbenstange 10 die Verbindung zwischen den beiden Arbeitsräumen 12 und 13 vollständig absperrt.

Die Länge der wirksamen Einschnürung 41 bestimmt den Lenkwinkel der ersten Lenkachse 1, innerhalb dessen die zweite Lenkachse 2 hydraulisch zentriert bleibt und nicht mitlenkt. Außerhalb des Bereiches der Einschnürung 41 ist die Einrichtung 38 zum Synchronisieren dicht. Hierbei ist die hydrostatische Verbindung zwischen der ersten Lenkachse 1 und der zweiten Lenkachse 2 aktiv. Dies bedeutet, daß auf die zweite Lenkachse 2 Stellkräfte in Verbindung mit höheren Drücken wirken. Treten in dieser Phase Leckagen in dem hydrostatischen System auf, so ändert sich die Zuordnung des Nehmerzylinders 23 zu dem Geberzylinder 11. Diese Änderung wird bei jedem Überfahren der Einschnürung 41 kompensiert, d. h. es wird synchronisiert. Bei dieser Ausbildung der Einrichtung 38 ist es wichtig, daß die wirksamen Kolbenflächen der Arbeitsräume 12, 13 des Geberzylinders 11 gleich groß sind. Ungleiche Flächen würden zu einem hydraulischen Blockieren beim Synchronisieren führen. Der Nehmerzylinder 23 weist ebenfalls ausgeglichene Kolbenflächen auf.

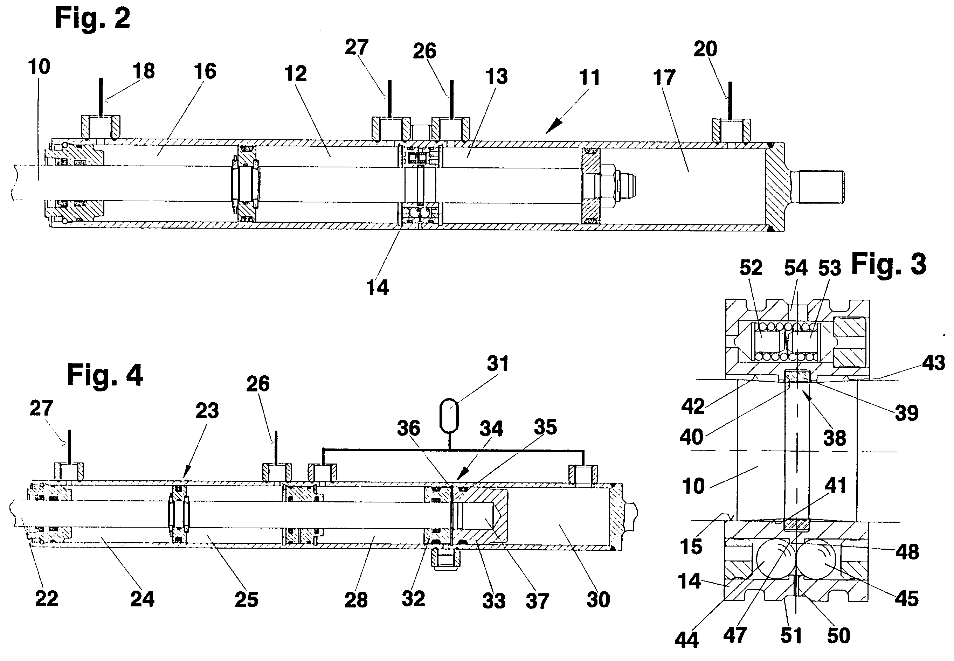

Um zu verhindern, daß bei einem Anstieg der Temperatur der Mehrachslenkanlage eine Druckerhöhung auftritt, sind zwischen jedem Arbeitsraum des Geberzylinders 11 bzw. des Nehmerzylinders 23 einerseits und dem Druckspeicher 31 andererseits Ausgleichsventile 44 und 45 angeordnet. In dem schematischen Ausführungsbeispiel der Fig. 1 sind die Ausgleichsventile 44 und 45 zwischen den beiden Leitungen 26 und 27 einerseits und einer zu dem Druckspeicher 31 führenden Leitung 46 angeordnet. In der konstruktiven Ausführungsform der Fig. 3 sind die beiden Ausgleichsventile 44 und 45 in dem Führungseinsatz 14 integriert. Sie sind hierbei als Kugelsitzventile ausgebildet und weisen zwei voneinander abgewandte, koaxial zueinander angeordnete Ventilsitze 47 und 48 auf. Der Abstand der Ventilsitze 47 und 48 ist derart festgelegt, daß sich die Ventilkugeln berühren, bevor eine der Ventilkugeln an einem der Ventilsitze 47 bzw. 48 anliegt. Zwischen den beiden Ventilsitzen 47 und 48 befindet sich eine Bohrung 50, die zu einer Ringnut 51 führt, an die der Druckspeicher 31 angeschlossen ist. Durch den festgelegten Abstand der beiden Ventilsitze 47 und 48 wird erreicht, daß jeweils nur ein Arbeitsraum 12 bzw. 13 über die Bohrung 50 mit dem Druckspeicher 31 verbunden sein kann, während der andere Arbeitsraum 13 bzw. 12 von dem Druckspeicher 31 getrennt ist. Über die beiden Ausgleichsventile 44 und 45 ist somit auch keine Verbindung zwischen den beiden Arbeitsräumen 12 und 13 möglich.

Zur Begrenzung der Arbeitsdrücke in der hydrostatischen Lenkung ist für jede Seite dieser Lenkung ein Druckbegrenzungsventil 52 bzw. 53 vorgesehen. Die Druckbegrenzungsventile 52 und 53 sind in dem Ausführungsbeispiel nach Fig. 1 zwischen den Leitungen 26 und 27 einerseits und der zu dem Druckspeicher 31 führenden Leitung 46 andererseits eingesetzt. In dem Ausführungsbeispiel nach Fig. 3 sind die Druckbegrenzungsventile 52 und 53 zusammen mit den Ausgleichsventilen 44 und 45 in dem Führungseinsatz 14 angeordnet. Auch hierbei ist die druckabgewandte Seite der Druckbegrenzungsventile 52 und 53 an den Druckspeicher 31 angeschlossen, und zwar über eine Bohrung 54 und die Ringnut 51.

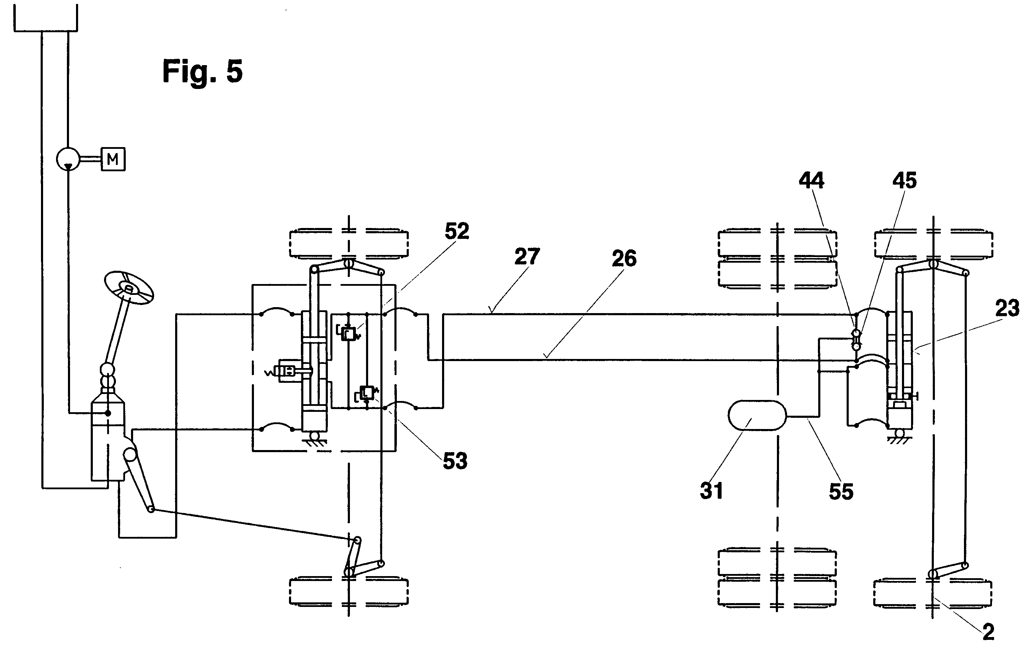

In dem Ausführungsbeispiel nach Fig. 5 sind die Ausgleichsventile 44 und 45 und der Druckspeicher 31 in direkter Nachbarschaft des Nehmerzylinders 23 der zweiten Lenkachse 2 angeordnet. Die beiden Ausgleichsventile 44 und 45 sind, ähnlich wie bei dem Ausführungsbeispiel der Fig. 1, zwischen den Leitungen 26 und 27 einerseits und einer zu dem Druckspeicher 31 führenden Leitung 55 eingesetzt. Der Vorteil dieser Anordnung besteht darin, daß die bei dem Ausführungsbeispiel nach Fig. 1 erforderliche lange Leitung 46 vom Vorderteil zum Hinterteil des Fahrzeuges entfallen kann. Die Druckbegrenzungsventile 52 und 53 sind derart angeordnet, daß ihre druckabgewandte Seite jeweils an die andere Seite der hydrostatischen Lenkung angeschlossen ist, so daß das an die Leitung 26 angeschlossene Rückschlagventil 53 in die Leitung 27 öffnet und umgekehrt.

Wird der Druck des Druckspeichers 31 einstellbar ausgelegt, so kann dadurch die Zentrierkraft der Zentriereinrichtung 34 eingestellt werden.

### Bezugszeichen

- 1: erste Lenkachse
- 2: zweite Lenkachse
- 3: Hinterachse
- 4: Lenkgetriebe
- 5: Servopumpe
- 6: Behälter
- 7: Fahrzeugmotor
- 8: Lenkgestänge
- 9: -
- 10: Kolbenstange
- 11: Geberzylinder
- 12: Arbeitsraum
- 13: Arbeitsraum
- 14: Führungseinsatz
- 15: Durchlaß
- 16: Arbeitsraum
- 17: Arbeitsraum
- 18: Arbeitsleitung
- 19: -
- 20: Arbeitsleitung
- 21: Lenkgestänge
- 22: Kolbenstange
- 23: Nehmerzylinder
- 24: Arbeitsraum
- 25: Arbeitsraum
- 26: Druckleitung
- 27: Druckleitung
- 28: Arbeitsraum
- 29: -
- 30: Arbeitsraum
- 31: Druckspeicher
- 32: Kolben
- 33: Kolben
- 34: Zentriereinrichtung
- 35: Federring
- 36: Federring
- 37: Zwischenraum
- 38: Einrichtung zum Synchronisieren
- 39: Dichtring
- 40: Ringnut
- 41: Einschnürung
- 42: Axialnut
- 43: Axialnut
- 44: Ausgleichsventil
- 45: Ausgleichsventil
- 46: Leitung
- 47: Ventilsitz
- 48: Ventilsitz
- 49: -
- 50: Bohrung
- 51: Ringnut
- 52: Druckbegrenzungsventil
- 53: Druckbegrenzungsventil
- 54: Bohrung
- 55: Leitung

## Patentansprüche

1. Mehrachslenkanlage für Fahrzeuge, mit einem Lenkgetriebe (4) für eine erste Lenkachse (1) und mit einer hydrostatischen Lenkung für eine zweite Lenkachse (2),
- wobei an der ersten Lenkachse (1) ein Geberzylinder (11) und an der zweiten Lenkachse (2) ein Nehmerzylinder (23) angeordnet sind,
- wobei der Nehmerzylinder (23) zwei Arbeitsräume (24, 25) aufweist, die über Druckleitungen (26, 27) mit zwei Arbeitsräumen (12, 13) des Geberzylinders (11) verbunden sind und wobei diese Teile zusammen die hydrostatische Lenkung bilden;
- wobei die zweite Lenkachse (2) eine Zentriereinrichtung (34) für eine Rückstellung der gelenkten Räder der zweiten Lenkachse (2) in ihre Geradeausfahrtstellung aufweist,
dadurch **gekennzeichnet,**
- daß die beiden Arbeitsräume (12, 13) des Geberzylinders (11) gleiche wirksame Flächen aufweisen und
- daß an dem Geberzylinder (11) eine Einrichtung (38) zum automatischen Synchronisieren der Bewegungen des Geberzylinders (11) und des Nehmerzylinders (23) vorgesehen ist, durch die in der Geradeausfahrtstellung und in einem daran angrenzenden kleinen Bereich eine Verbindung nur zwischen den beiden Arbeitsräumen (12, 13) des Geberzylinders (11) herstellbar ist, so daß sich in den Arbeitsräumen (24, 25) des Nehmerzylinders (23) kein Druck aufbauen kann und die zweite Lenkachse in ihrer Geradeausfahrtstellung zentriert bleibt.

2. Mehrachslenkanlage nach Anspruch 1, dadurch **gekennzeichnet,** daß die Einrichtung (38) zum Synchronisieren in einem Führungseinsatz (14) der Kolbenstange (10) des Geberzylinders (11) durch einen elastischen Dichtring (39) gebildet ist, der in einer in dem Führungseinsatz (14) radial nach innen offenen Ringnut (40) gehalten ist und der mit einer ringförmigen Einschnürung (41) der Kolbenstange (10) derart zusammenwirkt, daß in der Geradeausfahrtstellung und in dem daran angrenzenden Bereich zwischen dem Dichtring (39) und der Einschnürung (41) eine offene Verbindung zwischen den Arbeitsräumen (12, 13) des Geberzylinders (11) besteht und daß außerhalb dieses Bereiches der Dichtring (39) dichtend an dem zylindrischen Teil der Kolbenstange (10) anliegt und so die beiden Arbeitsräume (12, 13) voneinander getrennt sind.

3. Mehrachslenkanlage nach Anspruch 2, dadurch **gekennzeichnet,** daß die Einschnürung (41) der Kolbenstange (10) in ihrer Mitte einen zylindrischen Bereich aufweist, an den sich nach beiden Seiten ein Übergang bis zum vollen Außendurchmesser der Kolbenstange (10) anschließt.

4. Mehrachslenkanlage nach einem der Ansprüche 1 bis 3, dadurch **gekennzeichnet,** daß zwischen jedem Arbeitsraum (12, 13) des Geberzylinders (11) bzw. jedem Arbeitsraum (24, 25) des Nehmerzylinders (23) und einem Druckspeicher (31) ein Ausgleichsventil (44, 45) angeordnet ist und daß jeweils nur eines der Ausgleichsventile (44, 45) eine Verbindung von dem Druckspeicher (31) zu einem Arbeitsraum (12 bzw. 13) herstellt, während der andere Arbeitsraum (13 bzw. 12) von dem Druckspeicher (31) getrennt ist.

5. Mehrachslenkanlage nach Anspruch 4, dadurch **gekennzeichnet,** daß die Ausgleichsventile (44, 45) als Kugelsitzventile ausgebildet sind.

6. Mehrachslenkanlage nach Anspruch 5, dadurch **gekennzeichnet,** daß die Ausgleichsventile (44, 45) in dem Führungseinsatz (14) angeordnet sind.

## Claims

1. Multi-axle steering system for vehicles with a steering gear (4) for a first steering axle (1), and with a hydrostatic control for a second steering axle (2),
- with a master cylinder (11) being disposed on the first steering axle (1) and a slave cylinder (23) on the second steering axle (2);
- with the slave cylinder (23) having two working chambers (24, 25) - connected via pressure lines (26, 27) to two working chambers (12, 13) of the master cylinder (11) - and with these parts together constituting the hydrostatic steering system;
- with the second steering axle (2) having a centering device (34) to reset the steered wheels of the second steering axle (2) to their straight-travelling position;
**characterized** in that
- the two working chambers (12, 13) of the master cylinder (11) feature the same working surfaces, and
- a device (38) is provided on the master cylinder (11) - for automatic synchronization of the movements of the master cylinder (11) and the slave cylinder (23) - through which in straight-travelling position and within a small range in the vicinity thereof a connection can be established only between the two working chambers (12, 13) of the master cylinder, so that no pressure can build up in the working chambers of the slave cylinder (23) and the second steering axle remains centered in its straight-travelling position.

2. Multi-axle steering system according to claim 1, **characterized** in that the synchronizing device (38), arranged in a guiding insert (14), is constituted by an elastic sealing ring, which is held in the guiding insert (14) in a radially-inward openring groove (40), and which cooperates with a ring-shaped constriction (41) of the piston rod (10) in such a manner that in the straight-travelling position and the immediate vicinity thereof range between sealing ring (39) and the constriction (41) there exists an open connection between the working chambers (12, 13) of the master cylinder (11), and that outside that range the sealing ring (39) is in sealing contact with the cylindrical part of the piston rod (10) and thus the two working chambers (12,13) are separated from each other.

3. Multi-axle steering system according to claim 2, **characterized** in that the center of the constriction (41) of the piston rod (10) features a cylindrical area with blending transitions on both sides extending to the full outer diameter of the piston rod (10).

4. Multi-axle steering system according to one of the claims 1 to 3, **characterized** in that between each working chamber (12, 13) of the master cylinder (11) - respectively between each working chamber (24, 25) of the slave cylinder (3) - and a pressure reservoir (31), there is an equalizer valve (44, 45) disposed; and that always only one of the equalizer valves (44, 45) establishes a connection from the pressure reservoir (31) to one working chamber (12 or 13), while the other working chamber (13 or 12) is separated from the pressure reservoir (31).

5. Multi-axle steering system according to claim 4, **characterized** in that the equalizer valves (44, 45) are ball seat valves.

6. Multi-axle steering system according to claim 5, **characterized** in that the equalizer valves (44, 45) are disposed in the guiding insert (14).

## Revendications

1. Dispositif de direction sur plusieurs essieux pour des véhicules comportant un mécanisme de direction (4) pour un premier essieu directeur (1) et une direction hydrostatique pour un deuxième essieu directeur (2),
- dans lequel, sur le premier essieu directeur (1) est agencé un cylindre capteur (11), et sur le deuxième essieu directeur (2), un cylindre récepteur (23),
- dans lequel le cylindre récepteur (23) comporte deux chambres de travail (24, 25) reliées par des conduites à pression (26, 27) à deux chambres de travail (12, 13) du cylindre capteur (11), ces éléments formant ensemble la direction hydrostatique,
- dans lequel le deuxième essieu directeur (2) comporte un dispositif de centrage (34) pour remettre les roues dirigées du deuxième essieu directeur (2) dans la position de la marche tout droit,
**caractérisé**
- en ce que les deux chambres de travail (12, 13) du cylindre capteur (11) présentent des surfaces actives identiques, et
- en ce que, sur le cylindre capteur (11), est prévu un dispositif (38) pour la synchronisation automatique des mouvements du cylindre capteur (11) et du cylindre récepteur (23) permettant d'établir, dans la position de marche tout droit et dans une petite zone avoisinante, une liaison uniquement entre les deux chambres de travail (12, 13) du cylindre capteur (11), de façon que, dans les chambres de travail (24, 25) du cylindre récepteu,r ne puisse pas avoir lieu une montée de pression et que le deuxième essieu directeur reste centré dans sa position de marche tout droit.

2. Dispositif de direction sur plusieurs essieux selon la revendication 1, **caractérisé** en ce que le dispositif (38) pour la synchronisation est formé dans un insert de guidage (14) de la tige de piston (10) du cylindre capteur (11) au moyen d'un anneau d'étanchéité flexible (39) qui est maintenu dans une rainure annulaire (40) ouverte dans le sens radial à l'intérieur de l'insert de guidage (14) et qui concourt avec un rétrécissement (41) de la tige de piston (10) de telle façon que, dans la position de la marche tout droit et la zone avoisinante, existe, entre l'anneau d'étanchéité (39) et le rétrécissement (41), une liaison ouverte entre les chambres de travail (12, 13) du cylindre capteur (11) et qu'en dehors de cette zone, l'anneau d'étanchéité (39) s'appuie hermétiquement sur la partie cylindrique de la tige de piston (10), de façon que les chambres de travail (12, 13) sont séparées l'une de l'autre.

3. Dispositif de direction sur plusieurs essieux selon la revendication 2, **caractérisé** en ce que le rétrécissement (41) de la tige de piston (10) présente en son centre, une partie cylindrique à laquelle se joint de chaque côté une zone de transition jusqu'au diamètre extérieur complet de la tige de piston (10).

4. Dispositif de direction sur plusieurs essieux selon l'une des revendications 1 à 3, **caractérisé** en ce qu'entre chaque chambre de travail (12, 13) du cylindre capteur (11), respectivement entre chaque chambre de travail (24, 25) du cylindre récepteur (23) et un accumulateur de pression (31) est agencée une soupape compensatrice (44, 45) et que seule une des soupapes compensatrices (44, 45) établit alternativement une liaison entre l'accumulateur de pression (31) et une des chambres de travail (12, respectivement 13), pendant que l'autre chambre de travail (13, respectivement 12) est séparée de l'accumulateur de pression (31).

5. Dispositif de direction sur plusieurs essieux selon la revendication 4, **caractérisé** en ce que les soupapes compensatrices (44, 45) sont constituées par des soupapes sphériques à siège.

6. Dispositif de direction sur plusieurs essieux selon la revendication 5, **caractérisé** en ce que les soupapes compensatrices (44, 45) sont agencées dans l'insert de guidage (14).
